# FASCICULE DE BREVET EUROPEEN

(11) **EP 0 593 377 B1**
(45) Date de publication et mention de la délivrance du brevet: **07.01.1998**
(21) Numéro de dépôt: 93440083.9
(22) Date de dépôt: 12.10.1993
(51) Int. Cl.: A01D 43/10, A01D 69/06, F16H 1/00

(54) **Faucheuse avec un entraînement perfectionné des rouleaux de traitement**
Mähmaschine mit Antriebsvorrichtung für Aufbereitungswalzen
Mower with a drive system for the conditioning rollers

(30) Priorité: 16.10.1992 FR 9212629
(43) Date de publication de la demande: 20.04.1994
(73) Titulaire: KUHN S.A., F-67700 Saverne (FR)
(72) Inventeur: Ermacora, Rino, F-67700 St Jean Saverne (FR); Wattron, Bernard, F-67700 Haegen (FR)

(56) Documents cités:
- EP-A- 0 429 382
- EP-A- 0 464 374
- DE-C- 32 977
- FR-A- 2 268 452
- GB-A- 1 209 131
- US-A- 4 519 188
- US-A- 4 949 535

## Description

L'invention se rapporte à une faucheuse comportant un groupe de fauche équipé d'organes de coupe et s'étendant transversalement à la direction de travail, et au moins un groupe d'organes de traitement comportant deux rouleaux de traitement contrarotatifs dont les axes de rotation s'étendent sensiblement parallèlement l'un à l'autre, de sorte à faire passer, entre eux, le flux de produit coupé par les organes de coupe, ces rouleaux de traitement étant guidés par un dispositif de guidage qui leur permet de s'adapter à l'épaisseur du flux de produit à traiter.

L'animation de ces rouleaux de traitement s'effectue par des organes d'entraînement entraînant le rouleau de traitement dont la position est sensiblement fixe, et par des organes de transmission transmettant le mouvement de rotation de ce rouleau de traitement au rouleau de traitement déplaçable, quel que soit l'écartement entre les deux rouleaux de traitement autorisé par le dispositif de guidage.

Par le document **EP 0 464 374 A1**, il est connu une faucheuse qui comporte une barre de coupe à disques s'étendant transversalement à la direction de travail. Derrière la barre de coupe est implanté un caisson dans lequel sont disposés deux rouleaux de traitement contrarotatifs s'étendant horizontalement l'un au-dessus de l'autre. Le rouleau de traitement inférieur est guidé directement dans les parois latérales du caisson, tandis que le rouleau de traitement supérieur est articulé à chaque paroi latérale du caisson au moyen d'un bras de guidage respectif implanté à l'intérieur dudit caisson. Ces bras de guidage placent le rouleau de traitement supérieur en contact avec le rouleau de traitement inférieur, tout en permettant au rouleau de traitement supérieur de s'écarter du rouleau de traitement inférieur lorsque l'épaisseur du flux de produit à traiter augmente. En outre, les deux rouleaux de traitement de cette faucheuse connue tournent à la même vitesse quel que soit l'écartement entre ces deux rouleaux de traitement autorisé par les bras de guidage. Ce résultat est obtenu au moyen de quatre roues dentées engrenant successivement l'une avec l'autre. La première roue dentée est montée sur l'arbre d'entrâinement du rouleau de traitement inférieur, la deuxième roue dentée est guidée en rotation dans le caisson, la troisième roue dentée est guidée en rotation sur l'axe de pivotement de l'un des deux bras de guidage et la quatrième roue dentée est montée sur l'arbre d'entraînement du rouleau de traitement supérieur. Toutes ces roues dentées s'étendent sans aucune protection à l'extérieur du caisson contenant les rouleaux de traitement. L'entraînement des rouleaux de traitement est réalisé au moyen d'un dispositif à poulies et courroies également implanté à l'extérieur dudit caisson.

Cette faucheuse connue comporte avantageusement des organes de transmission dont l'encombrement latéral est faible et qui sont destinés à transmettre le mouvement de rotation entre les rouleaux de traitement, quel que soit l'écartement entre lesdits rouleaux de traitement autorisé par les bras de guidage.

Toutefois, étant donné que les roues dentées sont implantées à l'extérieur du caisson sans aucune protection, celles-ci risquent d'être rapidement détériorées.

De plus, il est difficile de lubrifier correctement ces roues dentées.

Ces roues dentées ainsi implantées constituent enfin un risque de blessures.

Par le document **FR-A-2 268 452**, il est connu une autre faucheuse qui correspond au préambule de la revendication 1 et comporte tout d'abord un groupe de fauche équipé de deux tambours de coupe et s'étendant transversalement à la direction de travail. Elle comporte par ailleurs un groupe d'organes de traitement destiné à faire subir un traitement au produit coupé par les tambours de coupe.

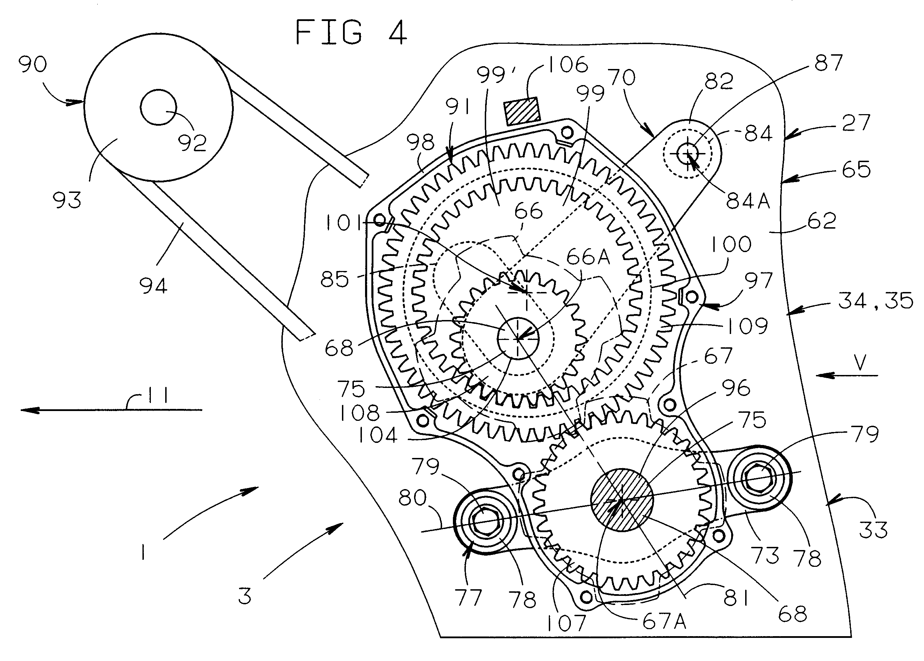

Dans l'exemple de réalisation représenté sur les figures 4 à 6, ce groupe d'organes de traitement comporte deux rouleaux de traitement contrarotatifs dont les axes de rotation s'étendent sensiblement parallèlement l'un à l'autre, de sorte à faire passer, entre eux, le flux de produit coupé par les tambours de coupe.

Le rouleau de traitement inférieur comporte un arbre qui est guidé en rotation dans le châssis. Un premier pignon est calé sur cet arbre et reçoit, via une chaîne d'entraînement, le mouvement d'un second pignon calé sur un arbre de sortie d'une boîte de transmission. L'arbre du rouleau de traitement inférieur porte en outre une première roue dentée et est également guidé en rotation dans la paroi latérale du bâti du groupe d'organes de traitement. Une deuxième roue dentée, en prise avec la première roue dentée, est également montée à rotation sur ladite paroi latérale. Une troisième roue dentée, en prise avec la deuxième roue dentée, est calée sur un arbre transversal qui s'étend parallèlement aux axes de rotation des rouleaux de traitement et qui est lui-même monté à rotation dans le bâti. Cet arbre transversal porte en outre un bras coudé à chaque extrémité. Le rouleau de traitement supérieur est monté à rotation sur les bras coudés. La troisième roue dentée, montée sur l'arbre transversal, est d'autre part en prise avec une quatrième roue dentée calée sur l'arbre du rouleau de traitement supérieur. Cet arbre traverse des lumières oblongues pratiquées dans les parois latérales pour permettre le déplacement vertical du rouleau de traitement supérieur Des ressorts sont tendus chacun entre l'extrémité libre du bras coudé correspondant et un support fixe respectif du bâti, et ont pour fonction de repousser le rouleau de traitement supérieur vers le rouleau de traitement inférieur.

Durant le travail, le mouvement moteur communiqué au rouleau de traitement inférieur est transmis au rouleau de traitement supérieur par le train de roues dentées, le mouvement s'en trouvant inversé. Ainsi, les deux rouleaux de traitement sont entraînés en synchronisme et le train de roues dentées n'entrave pas l'écartement du rouleau de traitement supérieur.

Cette faucheuse connue comporte également avantageusement des organes de transmission (train de roues dentées) dont l'encombrement latéral est faible et qui peuvent transmettre le mouvement de rotation entre les rouleaux de traitement, quel que soit l'écartement entre ces rouleaux de traitement autorisé par le pivotement des bras coudés autour de l'axe longitudinal de l'arbre transversal.

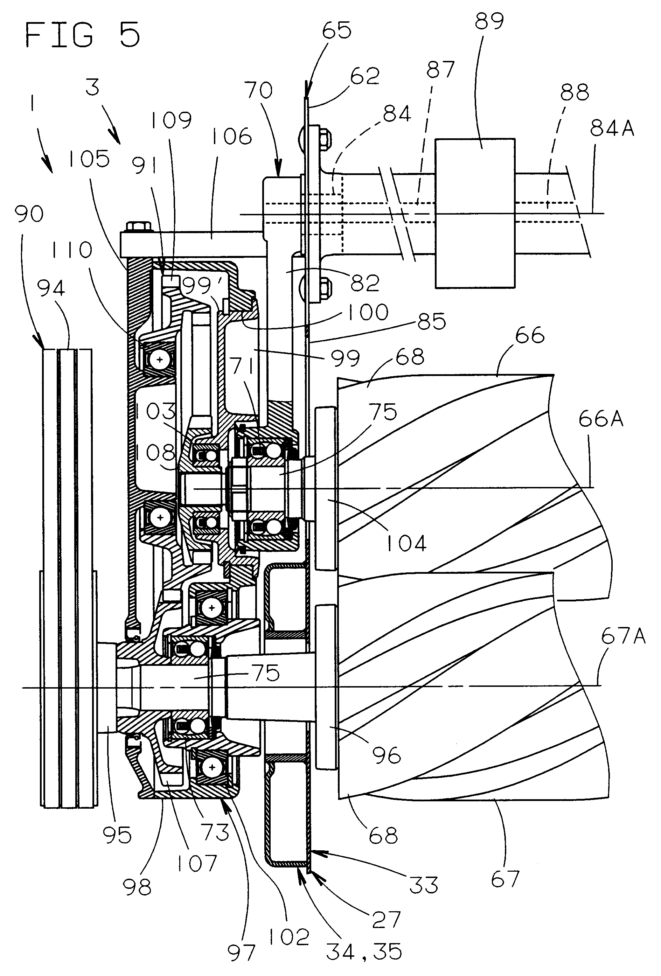

Sur les figures 4 et 5, il apparaît cependant que le train de roues dentées est implanté dans un carter largement ouvert vers le bas. De ce fait, lesdites roues dentées risquent aussi d'être rapidement détériorées puisqu'une lubrification correcte de celles-ci n'est notamment pas possible. Du reste, il y a, là-aussi, un risque de blessures.

L'invention a ainsi pour but d'obvier aux inconvénients de ces faucheuses connues, tout en conservant l'avantage de la compacité des organes de transmission destinés à transmettre le mouvement de rotation du rouleau de traitement dont la position est sensiblement fixe, jusqu'au rouleau de traitement déplaçable, quel que soit l'écartement entre ces rouleaux de traitement.

A cet effet, la faucheuse selon l'invention qui comporte :
- un groupe de fauche équipé d'organes de coupe et s'étendant transversalement à la direction de travail,
- au moins un groupe d'organes de traitement comportant deux rouleaux de traitement contrarotatifs dont les axes de rotation s'étendent sensiblement parallèlement l'un à l'autre, de sorte à faire passer, entre eux, le flux de produit coupé par les organes de coupe, chaque rouleau de traitement comportant un arbre d'entraînement,
- un dispositif de guidage des rouleaux de traitement permettant auxdits rouleaux de traitement de s'adapter à l'épaisseur du flux de produits à traiter,
- des organes d'entraînement servant à entraîner le premier rouleau de traitement dont la position est sensiblement fixe,
   et
- des organes de transmission transmettant le mouvement de rotation du premier rouleau de traitement au deuxième rouleau de traitement déplaçable, quel que soit l'écartement entre les rouleaux de traitement autorisé par le dispositif de guidage au travail, lesdits organes de transmission étant implantés dans un carter,
   est caractérisée en ce que :
   a) le carter dans lequel sont implantés les organes de transmission, est fermé ;
   b) ce carter fermé comporte une première partie et une deuxième partie articulées entre elles au moyen d'une articulation d'axe géométrique dirigé sensiblement parallèlement aux axes de rotation des rouleaux de traitement ;
   c) chacune de ces parties est en sus montée pivotante sensiblement autour de l'axe de rotation du rouleau de traitement correspondant.

Grâce à ces caractéristiques, les organes de transmission transmettant le mouvement de rotation du premier rouleau de traitement au deuxième rouleau de traitement sont bien protégés et peuvent être correctement lubrifiés.

En outre, tout risque de blessures est éliminé.

Selon une caractéristique supplémentaire de l'invention, les organes de transmission pourront avantageusement comprendre au moins un couple de roues dentées pour rendre les rouleaux de traitement contrarotatifs.

Selon une autre caractéristique supplémentaire de l'invention, il pourra également être prévu que le carter soit sensiblement étanche.

Selon une autre caractéristique supplémentaire de l'invention, il pourra être prévu que les organes de transmission comportent exclusivement des roues dentées.

Dans une réalisation préférentielle, les organes de transmission comportent trois roues dentées :
- une première roue dentée fixée sur l'arbre d'entraînement du premier rouleau de traitement ;
- une deuxième roue dentée centrée sur l'axe géométrique de l'articulation liant entre elles les deux parties du carter et entraînée en rotation à partir de ladite première roue dentée ;
   et
- une troisième roue dentée fixée sur l'arbre d'entraînement du deuxième rouleau de traitement et entraînée en rotation à partir de ladite deuxième roue dentée.

Cette deuxième roue dentée pourra être constituée d'une couronne dentée à sa périphérie extérieure et à sa périphérie intérieure, la première roue dentée engrenant avec la périphérie extérieure de cette couronne dentée et la deuxième roue dentée engrenant avec la périphérie intérieure de ladite couronne dentée.

Selon une autre caractéristique supplémentaire de l'invention, le premier rouleau de traitement pourra s'étendre au moins sensiblement horizontalement, transversalement à la direction de travail et plus bas que le deuxième rouleau de traitement. Ce premier rouleau de traitement sera également avantageusement décalé vers l'arrière, compte tenu du sens d'avance au travail, de sorte que le produit traité soit projeté vers l'arrière et vers le haut.

Selon une autre caractéristique supplémentaire de l'invention, les organes de transmission pourront avantageusement être au moins sensiblement coplanaires de sorte que l'encombrement latéral du carter soit fortement réduit.

Selon une autre caractéristique supplémentaire de l'invention, il pourra encore être prévu que les organes d'entraînement entraînent le premier rouleau de traitement du même côté que celui où sont implantés les organes de transmission, de sorte que les deux arbres d'entraînement des rouleaux de traitement soient implantés du même côté. Les organes d'entraînement et les organes de transmission seront ainsi aisément accessibles et l'espace de l'autre côté des rouleaux de traitement sera entièrement libre.

Selon une autre caractéristique supplémentaire de l'invention, il pourra être prévu que les organes d'entraînement entraînent directement l'arbre d'entraînement du premier rouleau de traitement. Ainsi, en cas de détérioration d'un organe de transmission, il est possible de retirer celui-ci ou, au pire des cas, de retirer l'ensemble du carter latéral et de continuer à travailler en conservant l'entraînement du premier rouleau de traitement.

A cet égard, l'arbre d'entraînement du premier rouleau de traitement traversera avantageusement la première partie du carter de part en part et comportera, à son extrémité débouchant de ladite première partie, un organe d'entraînement au moyen duquel le premier rouleau de traitement sera directement entraîné.

Selon une autre caractéristique supplémentaire de l'invention, les organes de transmission pourront comporter certains desdits organes d'entraînement.

Selon une autre caractéristique supplémentaire de l'invention, l'une des deux parties du carter pourra comporter au moins un disque suspectible de pivoter autour de l'axe géométrique de l'articulation liant entre elles les deux parties du carter, ce disque pivotant étant traversé, de manière décentrée, par l'arbre d'entraînement de l'un des rouleaux de traitement. Dans une réalisation avantageuse, c'est la deuxième partie du carter qui est constituée d'un seul disque pivotant lié à la première partie du carter au moyen de ladite articulation.

Selon une autre caractéristique supplémentaire de l'invention, il pourra en sus être prévu :
- que les deux rouleaux de traitement s'étendent entre deux parois d'un caisson implantées sensiblement orthogonalement aux axes de rotation desdits rouleaux de traitement ;
- qu'un tourillon soit agencé à chaque extrémité longitudinale de chaque rouleau de traitement; et
- que le dispositif de guidage comporte quatre paliers guidant lesdits tourillons et liés auxdites parois.

Selon une autre caractéristique supplémentaire de l'invention, le dispositif de guidage pourra comporter des liaisons élastiques servant à atténuer les vibrations des rouleaux de traitement. Dans une réalisation très avantageuse, les liaisons élastiques du premier rouleau de traitement comportent chacune au moins un élément élastique par l'intermédiaire duquel les paliers correspondants servant à guider le premier rouleau de traitement sont fixés à la paroi correspondante.

Selon une autre caractéristique supplémentaire de l'invention, le dispositif de guidage pourra également comporter deux bras de guidage, de sorte que chaque palier servant à guider le deuxième rouleau de traitement soit lié à la paroi correspondante au moyen de l'un correspondant desdits bras de guidage articulé sur ladite paroi à l'aide d'une articulation présentant un axe de pivotement parallèle à l'axe de rotation dudit deuxième rouleau de traitement, afin que ce deuxième rouleau de traitement puisse être éloigné du premier rouleau de traitement par pivotement autour dudit axe de pivotement. Les liaisons élastiques pourront alors être constituées chacune d'un organe élastiquement déformable implanté entre le bras de guidage correspondant et le caisson, de manière à ramener et à plaquer ledit deuxième rouleau de traitement contre le premier rouleau de traitement.

Préférentiellement, ces bras de guidage et ces paliers s'étendront à l'extérieur des parois. Grâce à cet agencement, les bras de guidage n'entraveront pas l'écoulement du flux de produit coupé et le produit coupé ne risquera pas de se loger entre chaque bras de guidage et la paroi correspondante.

De plus, du côté du caisson où est implanté le carter, il sera intéressant que les paliers correspondants s'étendent entre ledit carter et la paroi respective.

Afin de garantir un fonctionnement relativement silencieux des rouleaux de traitement, il sera avantageux que le carter soit lié à la paroi correspondante au moyen d'organes élastiques.

En sus, il pourra être prévu que l'une des parties du carter soit fixée à l'un desdits paliers du premier rouleau de traitement, et que lesdits organes élastiques comportent l'élément élastique servant à lier ledit palier à la paroi correspondante.

Ladite partie du carter pourra en sus être fixée directement à la paroi correspondante au moyen d'un autre organe élastique.

La faucheuse selon l'invention pourra aussi comporter deux groupes d'organes de traitement situés l'un à côté de l'autre, les organes de transmission respectifs étant alors implantés sur les côtés extérieurs de ces deux groupes.

D'autres caractéristiques de l'invention apparaissent dans la description suivante d'un exemple non limitatif de réalisation de l'invention faite en référence au dessin annexé sur lequel :
- la figure 1 représente une vue de dessus d'une faucheuse selon l'invention attelée à un tracteur agricole ;
- la figure 2 représente une vue latérale du corps de ladite faucheuse en position de travail ;
- la figure 3 représente une vue partielle du mécanisme de récolte suivant la flèche III de la figure 2 ;
- la figure 4 représente une vue latérale agrandie de l'entraînement d'un groupe de rouleaux de traitement de ladite faucheuse ;
- la figure 5 représente une coupe de l'entraînement du groupe de rouleaux de traitement vu suivant la flèche V de la figure 4 ;
- la figure 6 représente une vue latérale opposée du groupe de rouleaux de traitement de la figure 4 ;
- la figure 7 représente une vue latérale de l'entraînement d'un groupe de rouleaux de traitement, lorsque ces derniers se séparent l'un par rapport a l'autre.

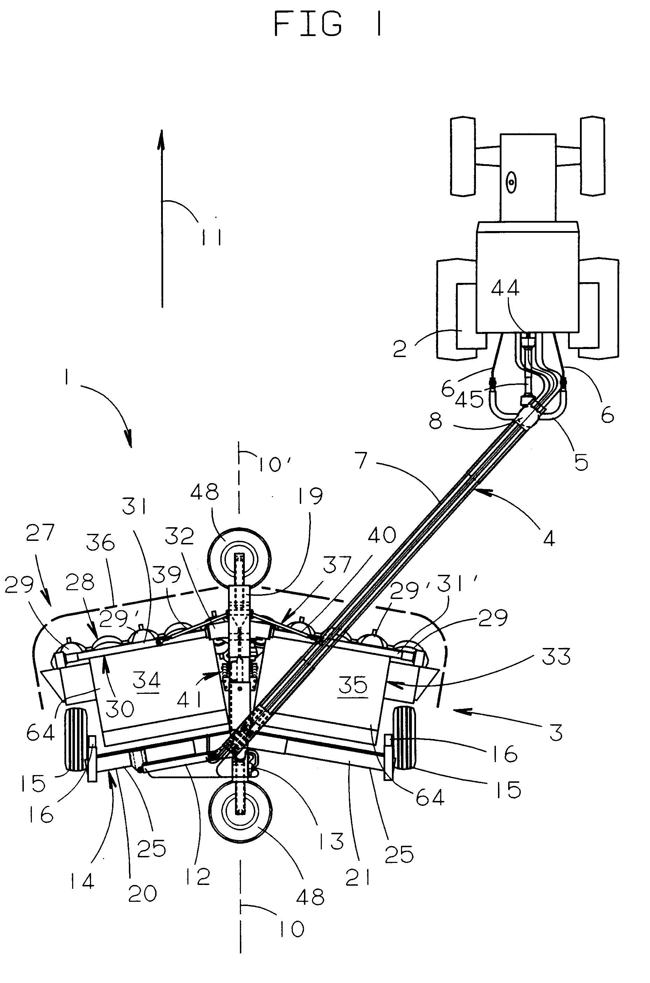

La figure 1 montre une faucheuse (1) selon l'invention. Celle-ci est attelée à un tracteur agricole (2).

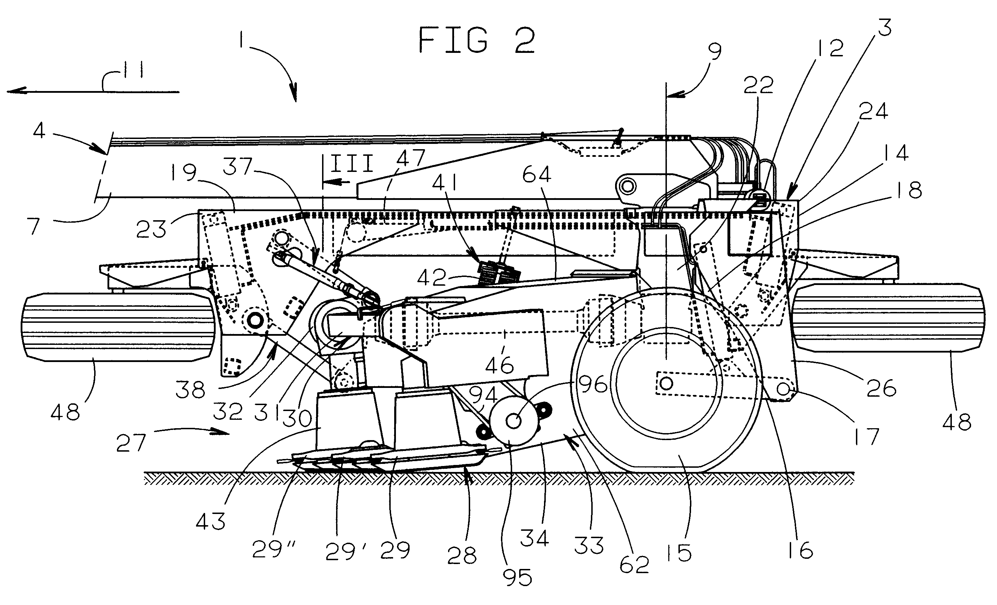

Elle se compose d'un corps (3) et d'un timon (4). Le timon (4), quant à lui, se compose d'un timon primaire (5) destiné à être attelé aux bras inférieurs (6) de l'attelage du tracteur agricole (2), et d'un timon secondaire (7) lié au corps (3) de la faucheuse (1). Le timon primaire (5) est lié à l'extrémité frontale du timon secondaire (7) au moyen d'un dispositif de liaison (8) connu de l'homme de l'art et qui autorise notamment un pivotement du timon primaire (5) par rapport au timon secondaire (7) autour d'un axe au moins sensiblement vertical. Près de son extrémité arrière, le timon secondaire (7) est lié au corps (3) au moyen d'une articulation (non représentée) d'axe géométrique (9) (voir figure 2) au moins sensiblement vertical et s'étendant au moins sensiblement dans le plan vertical médian (10) du corps (3), dirigé suivant la direction d'avance (11) au travail. La position angulaire du timon (4) par rapport au corps (3) peut être modifiée en faisant pivoter le timon (4) autour de l'axe géométrique (9) de ladite articulation. La mise dans la position angulaire souhaitée et le maintien dans celle-ci sont réalisés par un vérin de manoeuvre (12) associé à un dispositif de détection (13). Grâce à cet agencement, le corps (3) de la faucheuse (1) peut, au travail, s'étendre - vu de l'arrière dans la direction d'avance (11) au travail - soit à droite, soit à gauche du tracteur agricole (2). Ceci autorise le fauchage en aller et retour.

Le corps (3) de la faucheuse (1) comporte un châssis (14) qui s'appuie sur le sol - au travail - au moyen de deux roues de travail (15) qui s'étendent chacune près d'une extrémité extérieure respective dudit châssis (14). Chaque roue de travail (15) est liée au châssis (14) au moyen d'un bras de roue (16) lui-même lié audit châssis (14) au moyen d'une articulation du type pivot (17) d'axe géométrique dirigé au moins sensiblement perpendiculairement à la direction d'avance (11) au travail. Les axes géométriques des articulations (17) des deux roues de travail (15) sont au moins sensiblement confondus. Entre chaque bras de roue (16) et le châssis (14) est par ailleurs prévu un vérin hydraulique (18) qui permet de faire pivoter le bras de roue (16) et la roue de travail (15) correspondante par rapport au châssis (14) autour de l'axe géométrique de l'articulation (17) correspondante. Ceci permet au châssis (14) d'être approché du sol pendant la phase de fauchage et d'être éloigné du sol lorsque le fauchage est interrompu.

Sur la figure 1 apparaît également très précisément la forme du châssis (14). Celui-ci se compose pour l'essentiel d'un élément médian (19) et de deux éléments latéraux (20, 21) s'étendant chacun d'un côté respectif dudit élément médian (19). L'élément médian (19) se compose principalement d'un palier (22) et deux consoles (23, 24) qui s'étendent au moins sensiblement horizontalement et au moins sensiblement suivant la direction d'avance (11) au travail (figure 2). Ces deux consoles - une console avant (23) et une console arrière (24) - sont liées rigidement, mais néanmoins de manière amovible, à l'avant, respectivement à l'arrière du palier (22). Les éléments latéraux (20, 21), quant à eux, sont constitué chacun d'une poutre (25) s'étendant au moins sensiblement horizontalement et transversalement à la direction d'avance (11) au travail, et à l'extrémité extérieure de laquelle, c'est-à-dire l'extrémité éloignée du palier (22), est fixée une jambe (26) s'étendant vers le bas. C'est à l'extrémité inférieure de cette jambe (26) qu'est lié le bras de roue (16) de la roue de travail (15) correspondante. Chaque élément latéral (20, 21) est également lié rigidement et de manière amovible au palier (22).

Sur les figures 1, 2 et 3, il apparaît par ailleurs que la faucheuse (1) comporte un mécanisme de récolte (27) qui s'étend sous la console avant (23) de l'élément médian (19) du châssis (14) et transversalement à la direction d'avance (11) au travail. Ce mécanisme de récolte (27) se compose d'une barre de coupe (28) supportant des organes de coupe (29, 29', 29'') et une structure porteuse (30) supportant des organes de traitement (33). La structure porteuse (30) comporte deux longerons (31, 31') et un carter d'entrée (32) situé plus précisément sous la console avant (23) et dans le plan vertical médian (10') du mécanisme de récolte (27) dirigé suivant la direction d'avance (11) au travail. Dans l'exemple représenté, ledit plan vertical médian (10') est confondu avec le plan vertical median (10) du corps (3). De part et d'autre du carter d'entrée (32), sont liés, de façon amovible, les deux longerons (31, 31') agencés symétriquement par rapport audit plan médian (10'). Ces longerons (31, 31') s'étendent sensiblement horizontalement et approximativement parallèlement aux éléments latéraux (20, 21) du châssis (14). Les organes de traitement (33) sont répartis suivant deux groupes (34, 35) d'organes de traitement (33), chacun fixé à un longeron (31, 31') respectif du mécanisme de récolte (27). Ils s'étendent derrière les organes de coupe (29, 29', 29'') en vue du traitement du produit coupé par ces derniers. Les deux groupes (34, 35) d'organes de traitement (33) sont, comme les longerons (31, 31'), agencés symétriquement par rapport au plan médian (10') du mécanisme de récolte (27). En sus, des organes de protection (36), représentés en traits mixtes sur la figure 1, entourent la partie frontale du mécanisme de récolte (27).

Un dispositif de suspension (37) lie le mécanisme de récolte (27) au châssis (14). Ce dispositif de suspension (37) est connu de l'homme de l'art et comporte un parallélogramme déformable (38) sensiblement vertical, implanté entre la console avant (23) du châssis (14) et la partie frontale du mécanisme de récolte (27). Compte tenu de son implantation centrale, ce parallélogramme déformable (38) permet une bonne adaptation du mécanisme de récolte (27) au sol. Le dispositif de suspension (37) comporte également deux organes de suspension latéraux (39, 40) implantés symétriquement de part et d'autre de la console avant (23), de façon à empêcher le pivotement du mécanisme de récolte (27) autour d'une droite dirigée vers le haut. De ce fait, le dispositif de suspension (37) autorise uniquement un déplacement en hauteur du mécanisme de récolte (27), ainsi qu'une inclinaison dudit mécanisme de récolte (27) par rapport au châssis (14) transversalement à la direction d'avance (11) au travail.

Un dispositif d'allègement (41) dont la structure apparaît sur les figures 1 et 2, collabore avec le dispositif de suspension (37). Ce dispositif d'allègement (41) comporte un groupe de quatre ressorts de traction (42) (figure 2) situé dans le voisinage du plan vertical dirigé suivant la direction d'avance (11) au travail et contenant le centre des masses du mécanisme de récolte (27). On voit également que ledit dispositif d'allègement (41) s'étend entre les deux groupes (34, 35) d'organes de traitement (33) et juste derrière deux rotors (43) s'étendant l'un près de l'autre dans la partie médiane de la barre de coupe (28).

L'entraînement du mécanisme de récolte (27) est réalisé à partir de la prise de force (44) du tracteur (2), qui attaque, par l'intermédiaire d'un arbre télescopique à joints universels (45) une chaîne cinématique connue de l'homme de l'art et qui aboutit au carter d'entrée (32) du mécanisme de récolte (27) par l'intermédiaire d'un autre arbre télescopique à joints universels (46) (figure 2).

Tel que visible sur la figure 2, la faucheuse (1) comporte encore un dispositif de relevage (47) du mécanisme de récolte (27). Ce dispositif de relevage (47) permet de déplacer en hauteur le mécanisme de récolte (27) par déformation du parallélogramme déformable (38).

Sur les figures 1 et 2, il apparaît également que la faucheuse (1) comporte deux roues de transport (48) servant à transporter la faucheuse (1) dans une direction perpendiculaire à la direction d'avance (11) au travail. Vu que l'implantation et le fonctionnement de ces roues de transport (48) sont connus de l'homme de l'art, ils ne seront pas décrits plus en détail.

Comme dit ci-dessus, le mécanisme de récolte (27) comporte notamment une barre de coupe (28) avec des organes de coupe (29, 29', 29'') et deux groupes (34, 35) d'organes de traitement (33) du produit coupé par lesdits organes de coupe (29, 29', 29'').

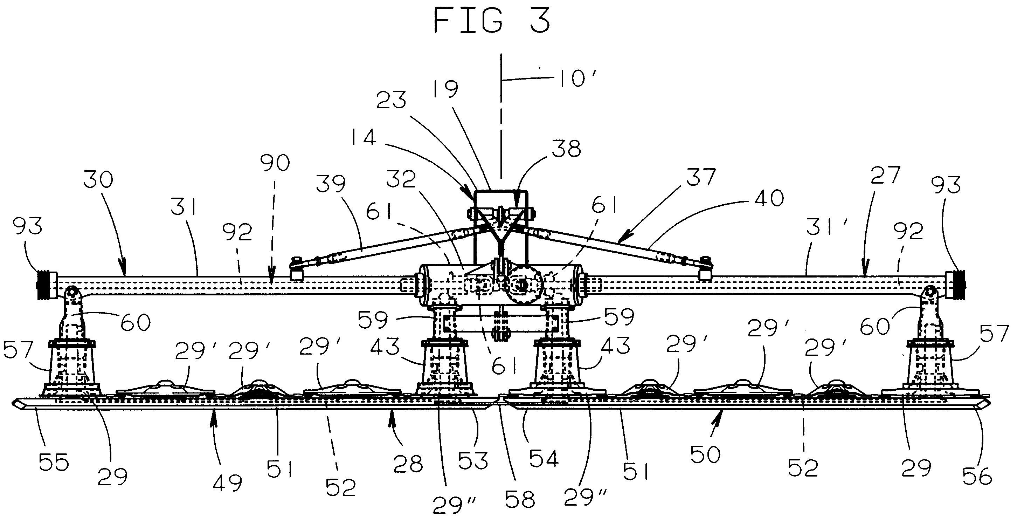

Ladite barre de coupe (28) est réalisée en deux parties (49, 50) (figure 3) munies chacune d'un certain nombre desdits organes de coupe (29, 29', 29'').

Chaque partie de barre de coupe (49, 50) comporte un carter (51) au-dessus duquel s'étendent les organes de coupe (29, 29', 29'') correspondants. Les organes de coupe (29, 29', 29'') sont, dans l'exemple représenté, réalisés sous forme d'organes de coupe rotatifs tournant chacun autour d'un axe respectif dirigé vers le haut. A cet effet, lesdits organes de coupe (29, 29', 29'') sont guidés en rotation dans le carter (51) correspondant qui contient une partie des éléments d'entraînement (52) desdits organes de coupe (29, 29', 29'') rotatifs. Cet agencement est connu de l'homme de l'art et ne sera donc pas décrit plus en détail. Du reste, l'organe de coupe (29'') s'étendant à l'extrémité (53, 54) d'une partie de barre de coupe (49, 50) adjacente à l'autre partie de barre de coupe (50, 49), est surmonté d'un rotor (43) tournant autour du même axe que ledit organe de coupe (29''). Ce sont ces rotors (43) qui s'étendent juste devant le dispositif d'allègement (41). L'organe de coupe (29) s'étendant à l'extrémité extérieure (55, 56) d'une partie de barre de coupe (49, 50) est également surmonté d'un rotor (57) tournant autour du même axe que ledit organe de coupe (29). Ces rotors (43, 57) servent à canaliser le flux de produit coupé en direction des deux groupes (34, 35) d'organes de traitement (33).

Sur les figures 1 et 3, il apparaît du reste, que les deux parties de barre de coupe (49, 50) sont directement accouplées l'une à l'autre au moyen d'un élément d'accouplement (58). Cet élément d'accouplement (58) s'étend, en vue de dessus, pour l'essentiel derrière les carters (51) des deux parties de barre de coupe (49, 50) et est vissé à chacune des extrémités adjacentes (53, 54) de celles-ci. Du reste, cet élément d'accouplement (58) s'étend, dans l'exemple représenté, sous le plan de coupe généré par les organes de coupe (29'') agencés aux extrémités adjacentes (53,54) des deux parties de barre de coupe (49, 50).

Comme dit ci-avant, la barre de coupe (28) ainsi formée, est liée à la structure porteuse (30). A cet effet, ladite structure porteuse (30) comporte deux organes porteurs centraux (59) et deux organes porteurs extérieurs (60), de telle sorte que chaque partie de barre de coupe (49, 50) soit liée à son extrémité (53, 54) voisine de l'autre partie de barre de coupe (49, 50) à un organe porteur central (59) et à son extrémité extérieure (55, 56) à un organe porteur extérieur (60).

L'entraînement des organes de coupe (29, 29', 29'') de chaque partie de barre de coupe (49, 50) s'effectue au moyen des éléments d'entraînement (52) implantés à l'intérieur du carter (51) de ladite partie de barre de coupe (49, 50). Les éléments d'entraînement (52) de chaque carter (51) reçoivent le mouvement de rotation depuis l'arbre télescopique à joints universels (46) par l'intermédiaire d'éléments de transmission (61) connus de l'homme de l'art et implantés dans le carter d'entrée (32) ainsi que dans l'organe porteur central (59) respectif. Le produit coupé par les organes de coupe (29, 29', 29'') de la barre de coupe (28) est ensuite transmis par lesdits organes de coupe (29, 29', 29'') aux groupes (34, 35) d'organes de traitement (33) qui traitent chacun une partie du flux de produit coupé.

Chaque groupe (34, 35) d'organes de traitement (33) comporte deux parois latérales (62, 63) s'étendant au moins sensiblement orthogonalement au carter (51) correspondant et fixées à leur extrémité frontale à la structure porteuse (30). Une partie supérieure (64) au moins sensiblement horizontale lie les deux parois latérales (62, 63) entre elles, de sorte à former un caisson (65). Dans ce caisson (65), le traitement du flux de produit coupé est réalisé au moyen de deux rouleaux de traitement (66, 67) présentant un axe de rotation (66A, 67A) respectif et s'étendant au moins sensiblement parallèlement au carter (51) de la partie de la barre de coupe (49, 50) correspondante. Ces rouleaux de traitement (66, 67) sont contrarotatifs et s'étendent l'un au-dessus de l'autre, de sorte que le flux de produit coupé passe entre lesdits rouleaux de traitement (66, 67). Afin de traiter de manière plus efficace le produit coupé, les rouleaux de traitement (66, 67) peuvent par exemple être recouverts de caoutchouc présentant des nervures en forme de chevrons. Pour projeter le produit traité vers l'arrière et vers le haut, le rouleau de traitement inférieur (67) est par ailleurs légèrement décalé vers l'arrière par rapport au rouleau de traitement supérieur (66).

Comme représentés sur les figures 4 à 7, les rouleaux de traitement (66, 67) sont liés, à chacune de leurs extrémités longitudinales (68, 69), à la paroi latérale (62, 63) correspondante du caisson (65), au moyen d'un dispositif de guidage (70). Ce dispositif de guidage (70) tend à maintenir au moins sensiblement les rouleaux de traitement (66, 67) en contact l'un avec l'autre, tout en permettant auxdits rouleaux de traitement (66, 67) de s'écarter momentanément l'un de l'autre, lorsque l'épaisseur du flux de produit à traiter augmente.

Le dispositif de guidage (70) comporte quatre paliers rotulants (71, 72, 73, 74) servant à guider les rouleaux de traitement (66, 67) à chacune de leurs extrémités longitudinales (68, 69). A chaque extrémité longitudinale (68, 69), chaque rouleau de traitement (66, 67) comporte à cet effet un tourillon (75, 76). Ces quatre tourillons (75, 76) portent chacun un palier rotulant (71, 72, 73, 74) lié directement ou indirectement à l'extérieur des parois latérales (62, 63) du caisson (65).

Les paliers rotulants (73, 74) du rouleau de traitement inférieur (67) par exemple, sont fixés chacun à la paroi latérale (62, 63) correspondante par l'intermédiaire de liaisons élastiques (77) servant à atténuer, voire à encaisser, les vibrations dudit rouleau de traitement (67) au travail. Dans l'exemple représenté sur les figures, chaque liaison élastique (77) est réalisée au moyen de deux éléments élastiques (78), du type "silentblocs" ou équivalents, solidaires du palier rotulant (73, 74) correspondant et fixés chacun à une paroi latérale (62, 63) respective à l'aide d'un boulon (79). Afin d'atténuer au maximum les vibrations de ce rouleau de traitement (67), qui se propagent perpendiculairement à son axe de rotation (67A), les éléments élastiques (78) s'étendent au moins sensiblement symétriquement de part et d'autre dudit axe de rotation (67A) et l'axe longitudinal de chaque boulon (79) s'étend au moins sensiblement parallèlement audit axe de rotation (67A). Avantageusement, les axes longitudinaux des boulons (79) s'étendent au moins sensiblement dans un plan géométrique (80) dirigé au moins sensiblement orthogonalement à un plan géométrique (81) contenant les axes de rotation (66A, 67A) des deux rouleaux de traitement (66, 67).

Les paliers rotulants (71, 72) du rouleau de traitement supérieur (66) sont liés chacun à la paroi latérale (62, 63) correspondante par l'intermédiaire d'un bras de guidage (82, 83) respectif. Les bras de guidage (82, 83) sont liés aux parois latérales (62, 63) du caisson (65) au moyen d'une articulation (84) présentant un axe de pivotement (84A) parallèle à l'axe de rotation du rouleau de traitement supérieur (66). De cette sorte, les bras de guidage (82, 83) autorisent un pivotement du rouleau de traitement supérieur (66) par rapport au rouleau de traitement inférieur (67), vers le haut, autour de l'axe de pivotement (84A) desdits bras de guidage (82, 83). Pour autoriser un tel pivotement, chaque paroi latérale (62, 63) présente un trou oblong (85, 86) traversé par le tourillon (75, 76) correspondant et permettant le déplacement dudit tourillon (75, 76) par rapport à ladite paroi latérale (62, 63).

L'axe de pivotement (84A) et les deux axes de rotation (66A, 67A) des rouleaux de traitement (66, 67) définissent un triangle au moins sensiblement équilatéral (figures 4, 6 et 7). Sur ces figures, on peut également remarquer que, compte tenu du sens d'avance au travail (11), ledit axe de pivotement (84A) s'étend derrière le plan géométrique (81) défini par lesdits axes de rotation (66A, 67A).

A chaque bras de guidage (82, 83) est lié rigidement un organe élastiquement déformable (87, 88) réalisé sous forme de barre de torsion par exemple. Grâce à ces deux organes élastiquement déformables (87, 88), le rouleau de traitement supérieur (66) est constamment ramené et plaqué contre le rouleau de traitement inférieur (67). Ce faisant, le traitement du produit coupé est mieux assuré. L'intensité du traitement peut être modulé au moyen d'un dispositif de réglage central (89) (figure 5) connu de l'homme de l'art et agissant simultanément sur les deux organes élastiquement déformables (87, 88).

L'entraînement de chaque groupe (34, 35) d'organes de traitement (33) s'effectue au moyen d'organes d'entraînement (90) et d'organes de transmission (91) implantés symétriquement de part et d'autre du plan vertical médian (10') du mécanisme de récolte (27). En effet, dans chaque longeron (31, 31') de la structure porteuse (30) est prévu un arbre (92) correspondant s'étendant depuis le carter d'entrée (32) jusqu'à l'extrémité extérieure du longeron (31, 31') respectif où chaque arbre (92) porte un premier organe rotatif (93) correspondant, du type poulie par exemple. Chaque premier organe rotatif (93) entraîne, via un élément sans fin (94), un deuxième organe rotatif (95) fixé sur l'arbre d'entraînement (96) correspondant du rouleau de traitement inférieur (67) de chaque groupe (34, 35) d'organes de traitement (33). Cet arbre d'entraînement (96) comporte avantageusement le tourillon (75) correspondant. Pour chaque groupe (34, 35) d'organes de traitement (33), les organes d'entraînement (90) ci-décrits entraînent donc directement chaque rouleau de traitement inférieur (67).

Dans l'exemple représenté sur les figures, les organes de transmission (91) transmettent le mouvement de rotation du rouleau de traitement inférieur (67) au rouleau de traitement supérieur (66), quelle que soit la position du rouleau de traitement supérieur (66) par rapport au rouleau de traitement inférieur (67) autorisée par le dispositif de guidage (70).

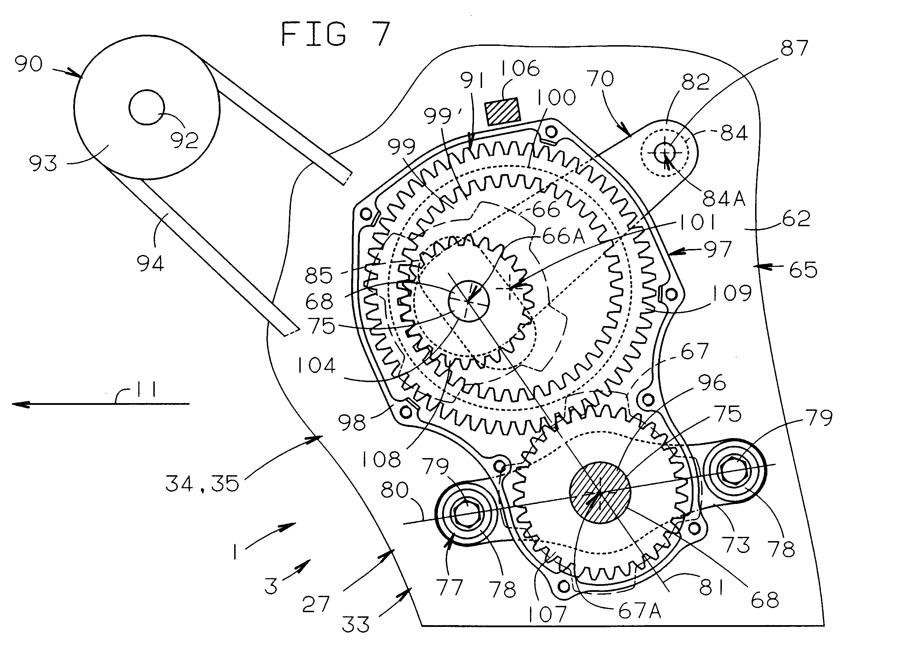

Selon l'invention, ces organes de transmission (91) sont implantés dans un carter latéral (97) comportant deux parties (98, 99) articulées entre elles au moyen d'une articulation (100) d'axe géométrique (101) (figures 4 et 7) dirigé au moins sensiblement parallèlement aux axes de rotation (66A, 67A) des rouleaux de traitement (66, 67). Chacune desdites parties (98, 99) est en sus montée pivotante au moins sensiblement autour de l'axe de rotation (66A, 67A) du rouleau de traitement (66, 67) correspondant. Comme visible sur la figure 5, la première partie (98) du carter latéral (97) est montée, par l'intermédiaire d'un roulement (102) à une rangée de billes à contact radial, sur le palier rotulant (73) correspondant du rouleau de traitement inférieur (67), tandis que la deuxième partie (99) en forme de disque pivotant (99') est montée de manière décentrée, par l'intermédiaire d'un roulement rotulant (103), sur l'arbre d'entraînement (104) du rouleau de traitement supérieur (66). Comme pour le rouleau de traitement inférieur (67), l'arbre d'entraînement (104) comporte le tourillon (75) correspondant. Dans les exemples de réalisation où le carter latéral (97) comporte une deuxième partie (99) en forme de disque pivotant (99'), l'axe géométrique (101) de celui-ci s'étend plus haut que l'axe de rotation (66A) du rouleau de traitement supérieur (66) lorsque les rouleaux de traitement (66, 67) sont au moins sensiblement en contact l'un avec l'autre.

Par ailleurs, lorsque le rouleau de traitement supérieur (66) s'écarte du rouleau de traitement inférieur (67), l'arbre d'entraînement (104) dudit rouleau de traitement supérieur (66) tourne avec la deuxième partie (99) du carter latéral (97) autour de l'axe géométrique (101) de l'articulation (100) matérialisée par la périphérie extérieure du disque pivotant (99') de ladite deuxième partie (99).

La première partie (98) du carter latéral (97) comporte, en outre, un couvercle latéral (105) (figure 5) fermant à l'aide de vis (non représentées) l'ensemble du carter latéral (97). En retirant le couvercle latéral (105), il est avantageusement possible d'accéder à l'ensemble des organes de transmission (91) implantés à l'intérieur du carter latéral (97). Le carter latéral (97) ci-décrit, est sensiblement étanche et lié à la paroi latérale extérieure (62) du caisson (65) au moyen du palier rotulant (73) à silentblocs précédemment décrit, et d'un organe élastique (106) lié à l'extrémité supérieure de la première partie (98) du carter latéral (97). Cet organe élastique (106) a pour fonction de compléter la liaison élastique (77) servant à atténuer les vibrations du rouleau de traitement inférieur (67) lors de sa rotation, en liant également de manière élastique le carter latéral (97) à la paroi latérale extérieure (62).

Comme dit précédemment, les organes de transmission (91) sont destinés à transmettre le mouvement de rotation du rouleau de traitement inférieur (67) au rouleau de traitement supérieur (66). A cet effet, les organes de transmission (91) comportent deux roues dentées (107, 108) et une couronne (109) dentée à sa périphérie intérieure et à sa périphérie extérieure. La première roue dentée (107) est montée sur l'arbre d'entraînement (96) qui porte le deuxième organe rotatif (95) des organes d'entraînement (90), et est située plus précisément entre le couvercle latéral (105) du carter latéral (97) et le palier rotulant (73) correspondant. Cette première roue dentée (107) engrène avec la périphérie extérieure de la couronne dentée (109) qui est liée au couvercle latéral (105) du carter latéral (97) au moyen d'un roulement (110) à une rangée de billes à contact radial et qui est centrée sur l'axe géométrique (101) du disque pivotant (99'). En tournant, la couronne dentée (109) engrène également à sa périphérie intérieure avec la troisième roue dentée (108) montée à l'extrémité de l'arbre d'entraînement (104) du rouleau de traitement supérieur (66), qui traverse à cet effet le disque pivotant (99') du carter latéral (97). La couronne dentée (109) et la deuxième roue dentée (108) s'étendent donc plus précisément entre le couvercle latéral (105) et le disque pivotant (99').

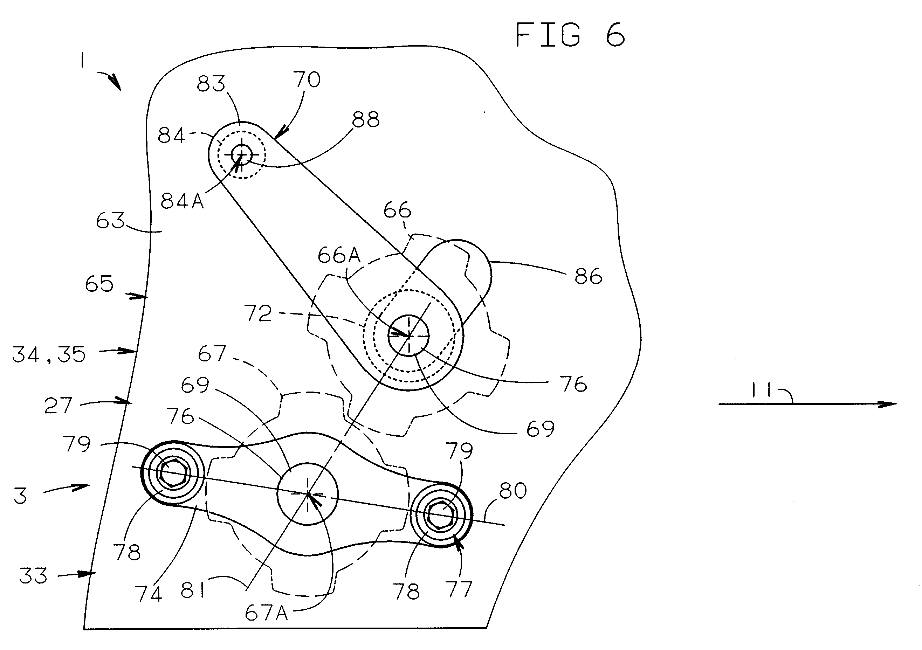

L'entraînement des rouleaux de traitement (66, 67) de chaque groupe (34, 35) d'organes de traitement (33) fonctionne de la manière suivante. Les organes d'entraînement (90) entraînent directement l'arbre d'entraînement (96) du rouleau de traitement inférieur (67) au moyen du deuxième organe rotatif (95). La première roue dentée (107) fixée sur le même arbre d'entraînement (96) transmet le mouvement de rotation, via la couronne dentée (109), à la deuxième roue dentée (108), donc à l'arbre d'entraînement (104) du rouleau de traitement supérieur (66). Les deux rouleaux de traitement (66, 67) sont donc continuellement entraînes. Dans l'exemple représenté sur les figures, les rouleaux de traitement (66, 67) sont identiques et entraînés à la même vitesse. Dès que le flux de produit à traiter augmente ou en cas d'obstacle, le rouleau de traitement supérieur (66) s'écarte du rouleau de traitement inférieur (67) en pivotant autour de l'articulation (84) liant les bras de guidage (82, 83) aux parois latérales (62, 63) du caisson (65). Ce faisant, le disque pivotant (99') du carter latéral (97) tourne autour de son axe géométrique (101) et fait pivoter la première partie (98) dudit carter latéral (97) autour de l'axe de rotation (67A) du rouleau de traitement inférieur (67), de sorte à conserver l'engrènement de la deuxième roue dentée (108) avec la couronne dentée (109) malgré le déplacement en hauteur du rouleau de traitement supérieur (66) (figures 4 et 6).

Lorque le flux de produit à traiter diminue ou dès que l'obstacle est passé entre les rouleaux de traitement (66, 67), le rouleau de traitement supérieur (66) revient au moins sensiblement en contact avec le rouleau de traitement inférieur (67) sous l'effet du poids dudit rouleau de traitement supérieur (66) combiné avec l'action des organes élastiquement déformables (87, 88) agissant sur les bras de guidage (82, 83). Ce faisant, les deux parties (98, 99) du carter latéral (97) pivotent en sens inverse jusqu'à revenir dans leur position initiale tout en conservant l'engrènement de la deuxième roue dentée (108) avec la couronne dentée (109).

L'entraînement des rouleaux de traitement (66, 67) de cette faucheuse (1) selon l'invention présente également les avantages suivants.

Les organes d'entraînement (90) et les organes de transmission (91) sont regroupés d'un côté du caisson (65). On peut, de ce fait, les placer du côté du caisson (65) où ils sont le plus accessibles.

Du reste, étant donné que les organes d'entraînement (90) et les organes de transmission (91) sont regroupés d'un côté du caisson (65), cela libère de l'espace de l'autre côté du caisson (65). Un tel agencement permet par exemple d'implanter le dispositif d'allègement (41) entre deux caissons (65), tel que cela apparaît sur la faucheuse (1) selon l'invention.

Etant donné que les deux rouleaux de traitement (66, 67) sont entraînés de manière synchrone quel que soit le déplacement de l'un des rouleaux de traitement (66, 67) par rapport à l'autre, le produit à couper est mieux traité. De surcroît, comme les rouleaux de traitement (66, 67) engrènent de ce fait avec plus de précision, leur usure est réduite.

Compte tenu du fait que les organes de transmission (91) sont au moins sensiblement coplanaires, l'encombrement latéral du carter (97) est particulièrement réduit.

De plus, les deux organes rotatifs (93, 95) et l'élément sans fin (94) présentent également un encombrement latéral réduit.

Comme visible sur les figures, l'encombrement latéral global de ces organes d'entraînement (90) et des organes de transmission (91) est donc très réduit.

Etant donné que les organes de transmission (91) de la faucheuse selon l'invention sont implantés à l'intérieur du carter latéral (97), ceux-ci sont mieux protégés.

Par ailleurs, on ne risque pas de se blesser aux organes de transmission (91).

Vu qu'à l'intérieur du carter latéral (97), la lubrification des organes de transmission est considérablement simplifiée, celle-ci peut être mieux assurée.

De surcroît, compte tenu du fait que chacune des deux parties (98, 99) du carter latéral (97) est montée pivotante par rapport au reste de la machine (1), l'étanchéité du carter latéral (97) est facile à réaliser.

Le montage des rouleaux de traitement (66, 67) et du carter latéral (97) sur des éléments élastiques (77, 87, 88, 106) garantit un fonctionnement relativement silencieux avec un minimum de vibrations.

En sus, au cas oú l'une des roues dentées (107, 108, 109) devait casser, il est possible de la retirer rapidement du carter latéral (97), ou tout simplement retirer tout le carter latéral (97), de sorte à pouvoir continuer à travailler en conservant l'entraînement du rouleau de traitement inférieur (67).

Vu que les bras de guidage (82, 83) sont implantés à l'extérieur du caisson (65), ils n'entravent pas l'écoulement du flux de produit coupé et le produit coupé ne risque pas de se loger entre le bras de guidage (82, 83) et la paroi latérale (62, 63) correspondante.

Finalement, différentes modifications restent possibles, notamment en ce qui concerne la constitution des divers éléments ou par substitution d'équivalents techniques, sans pour autant sortir du domaine de protection défini par les revendications.

## Revendications

1. Faucheuse comportant :
- un groupe de fauche (49, 50) équipé d'organes de coupe (29, 29', 29'') et s'étendant transversalement à la direction de travail (11);
- au moins un groupe (34, 35) d'organes de traitement (33) comportant deux rouleaux de traitement (67, 66) contrarotatifs dont les axes de rotation (67A, 66A) s'étendent sensiblement parallèlement l'un à l'autre, de sorte à faire passer, entre eux, le flux de produit coupé par les organes de coupe (29, 29', 29''), chaque rouleau de traitement (67, 66) comportant un arbre d'entraînement (96, 104) ;
- un dispositif de guidage (70) des rouleaux de traitement (67, 66) permettant auxdits rouleaux de traitement (67, 66) de s'adapter à l'épaisseur du flux de produit à traiter ;
- des organes d'entraînement (90) servant à entraîner le premier rouleau de traitement (67) dont la position est sensiblement fixe ;
et
- des organes de transmission (91) transmettant le mouvement de rotation du premier rouleau de traitement (67) au deuxième rouleau de traitement (66) déplaçable, quel que soit l'écartement entre les rouleaux de traitement (67, 66) autorisé par le dispositif de guidage (70) au travail, lesdits organes de transmission (91) étant implantés dans un carter (97) ;
***caractérisée en ce*** que ledit carter (97) est fermé et comporte une première partie (98) et une deuxième partie (99) articulées entre elles au moyen d'une articulation (100) d'axe géométrique (101) dirigé sensiblement parallèlement aux axes de rotation (67A, 66A) des rouleaux de traitement (67, 66) , chacune desdites parties (98, 99) étant en sus montée pivotante sensiblement autour de l'axe de rotation (67A, 66A) du rouleau de traitement (67, 66) correspondant.

2. Faucheuse selon la revendication 1, ***caractérisée en ce*** que les organes de transmission (91) comprennent au moins un couple de roues dentées (107, 109) pour rendre les rouleaux de traitement (67, 66) contrarotatifs.

3. Faucheuse selon la revendication 1 ou 2, ***caractérisée en ce*** que le carter (97) est sensiblement étanche.

4. Faucheuse selon l'une quelconque des revendications 1 à 3, ***caractérisée en ce*** que les organes de transmission (91) comportent exclusivement des roues dentées (107, 108, 109).

5. Faucheuse selon l'une quelconque des revendications 1 à 4, ***caractérisée en ce*** que les organes de transmission (91) comportent trois roues dentées (107, 109, 108) :
- une première roue dentée (107) fixée sur l'arbre d'entraînement (96) du premier rouleau de traitement (67) ;
- une deuxième roue dentée (109) centrée sur l'axe géométrique (101) de l'articulation (100) liant entre elles les deux parties (98, 99) du carter (97) et entraînée en rotation à partir de ladite première roue dentée (107);
et
- une troisième roue dentée (108) fixée sur l'arbre d'entraînement (104) du deuxième rouleau de traitement (66) et entraînée en rotation à partir de ladite deuxième roue dentée (109).

6. Faucheuse selon la revendication 5, ***caractérisée en ce*** que la deuxième roue dentée (109) est constituée d'une couronne dentée à sa périphérie extérieure et à sa périphérie intérieure, la première roue dentée (107) engrenant avec la périphérie extérieure de cette couronne dentée (109), tandis que la deuxième roue dentée (108) engrène avec la périphérie intérieure de ladite couronne dentée (109).

7. Faucheuse selon l'une quelconque des revendications 1 à 6, ***caractérisée en ce*** que le premier rouleau de traitement (67) s'étend au moins sensiblement horizontalement, transversalement à la direction de travail (11) et plus bas que le deuxième rouleau de traitement (66), et que ledit premier rouleau de traitement (67) est décalé vers l'arrière, compte tenu du sens d'avance au travail (11), de sorte que le produit traité soit projeté vers l'arrière et vers le haut.

8. Faucheuse selon l'une quelconque des revendications 1 à 7, ***caractérisée en ce*** que les organes de transmission (91) sont au moins sensiblement coplanaires et que l'encombrement latéral du carter (97) est fortement réduit.

9. Faucheuse selon l'une quelconque des revendications 1 à 8, ***caractérisée en ce*** que les organes d'entraînement (90) entraînent le premier rouleau de traitement (67) du même côté que celui où sont implantés les organes de transmission (91), de sorte que les deux arbres d'entraînement (96, 104) des rouleaux de traitement (67, 66) soient implantés du même côté.

10. Faucheuse selon l'une quelconque des revendications 1 à 9, ***caractérisée en ce*** que les organes d'entraînement (90) entraînent directement l'arbre d'entraînement (96) du premier rouleau de traitement (67).

11. Faucheuse selon la revendication 10, ***caractérisée en ce*** que l'arbre d'entraînement (96) du premier rouleau de traitement (67) traverse la première partie (98) du carter (97) de part en part et comporte, à son extrémité débouchant de ladite première partie (98), un organe d'entraînement (95) au moyen duquel le premier rouleau de traitement (67) est entraîné directement.

12. Faucheuse selon l'une quelconque des revendications 1 à 11, ***caractérisée en ce*** que les organes de transmission (91) comportent certains desdits organes d'entraînement (90).

13. Faucheuse selon l'une quelconque des revendications 1 à 12, ***caractérisée en ce*** que l'une (99) des deux parties (98,99) du carter (97) comporte au moins un disque (99') susceptible de pivoter autour de l'axe géométrique (101) de l'articulation (100) liant entre elles les deux parties (98, 99) du carter (97), ce disque pivotant (99') étant traversé, de manière décentrée, par l'arbre d'entraînement (104) de l'un (66) des rouleaux de traitement (67, 66).

14. Faucheuse selon la revendication 13, ***caractérisée en ce*** que la deuxième partie (99) du carter (97) est constituée d'un seul disque pivotant (99') lié à la première partie (98) du carter (97) au moyen de ladite articulation (100).

15. Faucheuse selon l'une quelconque des revendications 1 à 14, ***caractérisée en ce*** que :
- les deux rouleaux de traitement (67, 66) s'étendent entre deux parois (62, 63) d'un caisson (65) implantées sensiblement orthogonalement aux axes de rotation (67A, 66A) desdits rouleaux de traitement (67, 66);
- un tourillon (75, 76) est prévu à chaque extrémité longitudinale (68, 69) de chaque rouleau de traitement (67, 66); et
- le dispositif de guidage (70) comporte quatre paliers (71, 72, 73, 74) guidant lesdits tourillons (75, 76) et liés auxdites parois (62, 63).

16. Faucheuse selon la revendication 15, ***caractérisée en ce*** que le dispositif de guidage (70) comporte des liaisons élastiques (77, 87, 88) servant à atténuer les vibrations des rouleaux de traitement (67, 66).

17. Faucheuse selon la revendication 16, ***caractérisée en ce*** que les liaisons élastiques (77) du premier rouleau de traitement (67) comportent chacune au moins un élément élastique (78) par l'intermédiaire duquel les paliers (73, 74) correspondants servant à guider le premier rouleau de traitement (67) sont fixés à la paroi (62, 63) correspondante.

18. Faucheuse selon la revendication 16 ou 17, ***caractérisée en ce*** que :
- le dispositif de guidage (70) comporte deux bras de guidage (82, 83);
- chaque palier (71, 72) servant à guider le deuxième rouleau de traitement (66) est lié à la paroi (62, 63) correspondante au moyen de l'un correspondant desdits bras de guidage (82, 83) articulé sur ladite paroi (62, 63) à l'aide d'une articulation (84) présentant un axe de pivotement (84A) parallèle à l'axe de rotation (66A) dudit deuxième rouleau de traitement (66), de sorte que ce deuxième rouleau de traitement (66) puisse être éloigné du premier rouleau de traitement (67) par pivotement autour dudit axe de pivotement (84A);
et
- lesdites liaisons élastiques (87, 88) sont constituées chacune d'un organe élastiquement déformable (87, 88) implanté entre le bras de guidage (82, 83) correspondant et le caisson (65), de sorte à ramener et à plaquer ledit deuxième rouleau de traitement (66) contre le premier rouleau de traitement (67).

19. Faucheuse selon la revendication 18, ***caractérisée en ce*** que les bras de guidage (82, 83) et les paliers (71, 72, 73, 74) s'étendent à l'extérieur des parois (62, 63).

20. Faucheuse selon l'une quelconque des revendications 15 à 19, ***caractérisée en ce*** que du côté du caisson (65) où est implanté le carter (97), les paliers (71, 73) correspondants s'étendent entre ledit carter (97) et la paroi (62) respective.

21. Faucheuse selon l'une quelconque des revendications 15 à 20, ***caractérisée en ce*** que le carter (97) est lié à la paroi (62) correspondante à l'aide d'organes élastiques (77, 106).

22. Faucheuse selon les revendications 17 et 21, ***caractérisée en ce*** que l'une (98) des parties (98, 99) du carter (97) est fixée à l'un (73) desdits paliers (73, 74) du premier rouleau de traitement (67), et que lesdits organes élastiques (77, 106) comportent l'élément élastique (78) servant à lier ledit palier (73) à la paroi (62) correspondante.

23. Faucheuse selon la revendication 22, ***caractérisée en ce*** que ladite partie (98) du carter (97) est en sus fixée directement à la paroi (62) correspondante au moyen d'un autre organe élastique (106).

24. Faucheuse selon l'une quelconque des revendications 1 à 23, ***caractérisée en ce*** qu'elle comporte deux groupes (34, 35) d'organes de traitement (33) situés l'un à côté de l'autre, et que les organes de transmission (91) respectifs sont implantés sur les côtés extérieurs desdits groupes (34, 35).

25. Faucheuse selon l'une quelconque des revendications 1 à 24, ***caractérisée en ce*** qu'elle est destinée à être liée à un véhicule moteur (2).

## Claims

1. Mower including:
- a mower unit (49, 50) equipped with cutting members (29, 29', 29'') and extending transversely to the direction of work (11);
- at least one group (34, 35) of conditioning members (33) including two contrarotating conditioning rolls (67, 66) the axes of rotation (67A, 66A) of which extend substantially parallel to one another, so as to make the flow of product cut by the cutting members (29, 29', 29'') pass between them, each conditioning roll (67, 66) including a drive shaft (96, 104);
- a device (70) for guiding the conditioning rolls (67, 66) allowing the said conditioning rolls (67, 66) to adapt to the thickness of the flow of product to be conditioned;
- drive members (90) used for driving the first conditioning roll (67) whose position is substantially fixed;
and
- transmission members (91) transmitting the rotational movement from the first conditioning roll (67) to the second movable conditioning roll (66), irrespective of the separation between the conditioning rolls (67, 66) allowed by the guide device (70) during work, the said transmission members (91) being arranged inside a casing (97);
***characterized in** that* the said casing (97) is closed and includes a first part (98) and a second part (99) which are articulated together by means of an articulation (100) of geometric axis (101) directed substantially parallel to the axes of rotation (67A, 66A) of the conditioning rolls (67, 66), each one of the said parts (98, 99) additionally being mounted so that it can pivot substantially about the axis of rotation (67A, 66A) of the corresponding conditioning roll (67, 66).

2. Mower according to Claim 1, ***characterized in*** that the transmission members (91) comprise at least one pair of gearwheels (107, 109) for making the conditioning rolls (67, 66) counter-rotary.

3. Mower according to Claim 1 or 2, ***characterized in*** in that the casing (97) is substantially leaktight.

4. Mower according to any one of Claims 1 to 3, ***characterized in*** that the transmission members (91) include exclusively gearwheels (107, 108, 109).

5. Mower according to any one of Claims 1 to 4, ***characterized in*** that the transmission members (91) include three gearwheels (107, 109, 108):
- a first gearwheel (107) fixed on the drive shaft (96) of the first conditioning roll (67);
- a second gearwheel (109) centred on the geometric axis (101) of the articulation (100) joining the two parts (98, 99) of the casing (97) together and driven in rotation by the said first gearwheel (107);
and
- a third gearwheel (108) fixed on the drive shaft (104) of the second conditioning roll (66) and driven in rotation by the said second gearwheel (109).

6. Mower according to Claim 5, ***characterized in*** that the second gearwheel (109) consists of a ring gear toothed on its outside periphery and on its inside periphery, the first gearwheel (107) meshing with the outside periphery of this ring gear (109), while the second gear-wheel (108) meshes with the inside periphery of the said ring gear (109).

7. Mower according to any one of Claims 1 to 6, ***characterized in*** that the first conditioning roll (67) extends at least substantially horizontally, transversely to the direction of work (11) and lower down than the second conditioning roll (66), and in that the said first conditioning roll (67) is offset towards the rear, considering the direction of travel during work (11), so that the conditioned product is thrown out backwards and upwards.

8. Mower according to any one of Claims 1 to 7, ***characterized in*** that the transmission members (91) are at least substantially coplanar and in that the space requirement of the casing (97) is greatly reduced.

9. Mower according to any one of Claims 1 to 8, ***characterized in*** that the drive members (90) drive the first conditioning roll (67) from the same side as the transmission members (91) are located, so that the two drive shafts (96, 104) for the conditioning rolls (67, 66) are arranged on the same side.

10. Mower according to any one of Claims 1 to 9, ***characterized in*** that the drive members (90) directly drive the drive shaft (96) of the first conditioning roll (67).

11. Mower according to Claim 10, ***characterized in*** that the drive shaft (96) of the first conditioning roll (67) passes right through the first part (98) of the casing (97) and at its end which emerges from the said first part (98) includes a drive member (95) by means of which the first conditioning roll (67) is directly driven.

12. Mower according to any one of Claims 1 to 11, ***characterized in*** that the transmission members (91) include some of the said drive members (90).

13. Mower according to any one of Claims 1 to 12, ***characterized in*** that one (99) of the two parts (98, 99) of the casing (97) includes at least one disc (99') which can pivot about the geometric axis (101) of the articulation (100) joining the two parts (98, 99) of the casing (97) together, this pivoting disc (99') having the drive shaft (104) of one (66) of the conditioning rolls (67, 66) passing through it in an off-centred manner.

14. Mower according to Claim 13, ***characterized in*** that the second part (99) of the casing (97) consists of a single pivoting disc (99') joined to the first part (98) of the casing (97) by means of the said articulation (100).

15. Mower according to any one of Claims 1 to 14, ***characterized in*** that:
- the two conditioning rolls (67, 66) extend between two walls (62, 63) of a hood (65), these walls being arranged substantially orthogonally to the axes of rotation (67A, 66A) of the said conditioning rolls (67, 66);
- a journal (75, 76) is provided at each longitudinal end (68, 69) of each conditioning roll (67, 66); and
- the guide device (70) includes four bearings (71, 72, 73, 74) guiding the said journals (75, 76) and joined to the said walls (62, 63).

16. Mower according to Claim 15, ***characterized in*** that the guide device (70) includes elastic connections (77, 87, 88) which serve to attenuate the vibrations of the conditioning rolls (67, 66).

17. Mower according to Claim 16, ***characterized in*** that the elastic connections (77) of the first conditioning roll (67) each include at least one elastic element (78) by means of which the corresponding bearings (73, 74) serving to guide the first conditioning roll (67) are fixed to the corresponding wall (62, 63).

18. Mower according to Claim 16 or 17, ***characterized in*** that:
- the guide device (70) includes two guide arms (82, 83);
- each bearing (71, 72) serving to guide the second conditioning roll (66) is joined to the corresponding wall (62, 63) by means of a corresponding one of the said guide arms (82, 83) which is articulated to the said wall (62, 63) using an articulation (84) which has an axis of pivoting (84A) parallel to the axis of rotation (66A) of the said second conditioning roll (66), so that this second conditioning roll (66) can be moved away from the first conditioning roll (67) by pivoting about the said axis of pivoting (84A);
and
- the said elastic connections (87, 88) each consist of an elastically deformable member (87, 88) arranged between the corresponding guide arm (82, 83) and the hood (65) so as to return and press the said second conditioning roll (66) against the first conditioning roll (67).

19. Mower according to Claim 18, ***characterized in*** that the guide arms (82, 83) and the bearings (71, 72, 73, 74) extend outside the walls (62, 63).

20. Mower according to any one of Claims 15 to 19, ***characterized in*** that on the same side of the hood (65) where the casing (97) is located, the corresponding bearings (71, 73) extend between the said casing (97) and the respective wall (62).

21. Mower according to any one of Claims 15 to 20, ***characterized in*** that the casing (97) is joined to the corresponding wall (62) using elastic members (77, 106).

22. Mower according to Claims 17 and 21, ***characterized in*** that one (98) of the parts (98, 99) of the casing (97) is fixed to one (73) of the said bearings (73, 74) of the first conditioning roll (67) and in that the said elastic members (77, 106) include the elastic element (78) serving to join the said bearing (73) to the corresponding wall (62).

23. Mower according to Claim 22**, *characterized in*** that the said part (98) of the casing (97) is additionally fixed directly to the corresponding wall (62) by means of another elastic member (106).

24. Mower according to any one of Claims 1 to 23, ***characterized in*** that it includes two groups (34, 35) of conditioning members (33) which are situated one beside the other, and in that the respective transmission members (91) are located on the outboard sides of the said groups (34, 35).

25. Mower according to any one of Claims 1 to 24, ***characterized in*** that it is intended to be connected to a motor vehicle (2).

## Patentansprüche

1. Mähmaschine, die
- eine mit Schneidelementen (29, 29', 29'') ausgestattete Mähgruppe (49, 50), die sich quer zur Arbeitsrichtung (11) erstreckt;
- mindestens eine Gruppe (34, 35) von Aufbereitungsgliedern (33), die zwei gegenläufige Aufbereitungswalzen (67, 66) umfaßt, deren Drehachsen (67A, 66A) im wesentlichen parallel zueinander verlaufen, so daß der Strom von durch die Schneidelemente (29, 29', 29'') geschnittenem Gut zwischen ihnen hindurchgeführt werden kann, wobei jede Aufbereitungswalze (67, 66) eine Antriebswelle (96, 104) aufweist;
- eine Vorrichtung (70) zur Führung der Aufbereitungswalzen (67, 66), die es den Aufbereitungswalzen (67, 66) gestattet, sich an die Stärke des Stroms von aufzubereitendem Gut anzupassen;
- Antriebsglieder (90), die zum Antrieb der ersten Aufbereitungswalze (67), deren Position im wesentlichen festgelegt ist, dienen;
und
- Übertragungsglieder (91), die die Drehbewegung der ersten Aufbereitungswalze (67) auf die bewegliche zweite Aufbereitungswalze (66) unabhängig von dem Abstand zwischen den Aufbereitungswalzen (67, 66), der im Betrieb voll der Führungsvorrichtung (70) zugelassen wird, übertragen, wobei die Übertragungsglieder (91) in einem Getriebekasten (97) angeordnet sind,
umfaßt;
***dadurch gekennzeichnet***, daß der Getriebekasten (97) geschlossen ist und einen ersten Teil (98) und einen zweiten Teil (99) aufweist, die mittels eines Gelenks (100) mit einer im wesentlichen parallel zu den Drehachsen (67A, 66A) der Aufbereitungswalzen (67, 66) ausgerichteten geometrischen Achse (101) zueinander schwenkbar sind, wobei jeder dieser Teile (98, 99) darüber hinaus schwenkbar im wesentlichen um die Drehachse (67A, 66A) der dazugehörigen Aufbereitungswalze (67, 66) angebracht ist.

2. Mähmaschine nach Anspruch 1, ***dadurch gekennzeichnet*****,** daß die Übertragungsglieder (91) mindestens ein Paar Zahnräder (107, 109) aufweisen, um die Aufbereitungswalzen (67, 66) gegenläufig zu machen.

3. Mähmaschine nach Anspruch 1 oder 2, ***dadurch gekennzeichnet***, daß der Getriebekasten (97) im wesentlichen dicht ist.

4. Mähmaschine nach irgend einem der Ansprüche 1 bis 3, ***dadurch gekennzeichnet***, daß die Übertragungsglieder (91) ausschließlich Zahnräder (107, 108, 109) umfassen.

5. Mähmaschine nach irgend einem der Ansprüche 1 bis 4, ***dadurch gekennzeichnet***, daß die Übertragungsglieder (91) drei Zahnräder (107, 109, 108) umfassen:
- ein auf der Antriebswelle (96) der ersten Aufbereitungswalze (67) befestigtes erstes Zahnrad (107);
- ein auf der geometrischen Achse (101) des die beiden Teile (98, 99) des Getriebekastens (97) miteinander verbindenden Gelenks (100) zentriertes zweites Zahnrad (109), das von dem ersten Zahnrad (107) aus drehangetrieben wird;
und
- ein auf der Antriebswelle (104) der zweiten Aufbereitungswalze (66) befestigtes drittes Zahnrad (108), das von dem zweiten Zahnrad (109) aus drehangetrieben wird.

6. Mähmaschine nach Anspruch 5, ***dadurch gekennzeichnet***, daß das zweite Zahnrad (109) aus einem an seinem Außenumfang und seinem Innenumfang verzahnten Ring besteht, wobei das erste Zahnrad (107) mit dem Außenumfang dieses Zahnrings (109) in Eingiff steht, während das zweite Zahnrad (108) mit dem Innenumfang des Zahnrings (109) in Eingriff steht.

7. Mähmaschine nach irgend einem dei Ansprüche 1 bis 6, ***dadurch gekennzeichnet***, daß sich die erste Aufbereitungswalze (67) zumindest im wesentlichen horizontal sowie quer zur Arbeitsrichtung (11) und tiefer als die zweite Aufbereitungswalze (66) erstreckt, und daß die erste Aufbereitungswalze (67) hinsichtlich der Fahrtrichtung (11) im Betrieb nach hinten versetzt ist, so daß das aufbereitete Gut nach hinten und nach oben geschleudert wird.

8. Mähmaschine nach irgend einem der Ansprüche 1 bis 7, ***dadurch gekennzeichnet***, daß die Übertragungsglieder (91) zumindest im wesentlichen koplanar sind und daß der seitliche Platzbedarf des Getriebekastens (97) stark vermindert ist.

9. Mähmaschine nach irgend einem der Ansprüche 1 bis 8, ***dadurch gekennzeichnet***, daß die Antriebsglieder (90) die erste Aufbereitungswalze (67) auf der gleichen Seite antreiben, wie die, wo die Übertragungsglieder (91) angebracht sind, so daß die beiden Antriebswellen (96, 104) der Aufbereitungswalzen (67, 66) auf der gleichen Seite angebracht sind.

10. Mähmaschine nach irgend einem der Ansprüche 1 bis 9, ***dadurch gekennzeichnet***, daß die Antriebsglieder (90) die Antriebswelle (96) der ersten Aufbereitungswalze (67) direkt antreiben.

11. Mähmaschine nach Anspruch 10, ***dadurch gekennzeichnet***, daß die Antriebswelle (96) der ersten Aufbereitungswalze (67) den ersten Teil (98) des Getriebekastens (97) durchquert und an seinem aus dem ersten Teil (98) ragenden Ende ein Antriebsglied (95) aufweist, mittels dessen die erste Aufbereitungswalze (67) direkt angetrieben wird.

12. Mähmaschine nach irgend einem der Ansprüche 1 bis 11, ***dadurch gekennzeichnet***, daß die Übertragungsglieder (91) bestimmte der Antriebsglieder (90) enthalten.

13. Mähmaschine nach irgend einem der Ansprüche 1 bis 12, ***dadurch gekennzeichnet***, daß einer (99) der beiden Teile (98, 99) des Getriebekastens (97) mindestens eine Scheibe (99') aufweist, die um die geometrische Achse (101) des die beiden Teile (98, 99) des Getriebekastens (97) miteinander verbindenden Gelenks (100) schwenken kann, wobei diese Schwenkscheibe (99') auf dezentrierte Weise von der Antriebswelle (104) der einen (66) der Aufbereitungswalzen (67, 66) durchquert wird.

14. Mähmaschine nach Anspruch 13, ***dadurch gekennzeichnet***, daß der zweite Teil (99) des Getriebekastens (97) aus einer einzigen Schwenkscheibe (99') besteht, die mittels des Gelenks (100) mit dem ersten Teil (98) des Getriebekastens (97) verbunden ist.

15. Mähmaschine nach irgend einem der Ansprüche 1 bis 14, ***dadurch gekennzeichnet***, daß
- sich die beiden Aufbereitungswalzen (67, 66) zwischen zwei Wänden (62, 63) eines im wesentlichen orthogonal zu den Drehachsen (67A, 66A) der Aufbereitungswalzen (67, 66) angebrachten Gehäuses (65) erstrecken;
- ein Zapfen (75, 76) an jedem Längsende (68, 69) jeder Aufbereitungswalze (67, 66) vorgesehen ist; und
- die Führungsvorrichtung (70) vier Lager (71, 72, 73, 74) aufweist, die die Zapfen (75, 76) führen und mit den Wänden (62, 63) verbunden sind.

16. Mähmaschine nach Anspruch 15, ***dadurch gekennzeichnet***, daß die Führungsvorrichtung (70) elastische Verbindungen (77, 87, 88) enthält, die zum Dämpfen der Schwingungen der Aufbereitungswalzen (67, 66) dienen.

17. Mähmaschine nach Anspruch 16, ***dadurch gekennzeichnet***, daß die elastischen Verbindungen (77) der ersten Aufbereitungswalze (67) jeweils mindestens ein elastisches Glied (78) aufweisen, mittels dessen die dazugehörigen Lager (73, 74), die zur Führung der ersten Aufbereitungswalze (67) dienen, an der dazugehörigen Wand (62, 63) befestigt sind.

18. Mähmaschine nach Anspruch 16 oder 17, ***dadurch gekennzeichnet***, daß
- die Führungsvorrichtung (70) zwei Führungsarme (82, 83) enthält;
- jedes zur Führung der zweiten Aufbereitungswalze (66) dienende Lager (71, 72) mittels eines dazugehörigen der Führungsarme (82, 83), der mit Hilfe eines eine parallel zur Drehachse (66A) der zweiten Aufbereitungswalze (66) verlaufende Schwenkachse (84A) aufweisenden Gelenks (84) an der Wand (62, 63) angelenkt ist, mit der dazugehörigen Wand (62, 63) verbunden ist, so daß diese zweite Aufbereitungswalze (66) durch Schwenken um die Schwenkachse (84A) von der ersten Aufbereitungswalze (67) entfernt werden kann;
und
- die elastischen Verbindungen (87, 88) jeweils aus einem elastisch verformbaren Glied (87, 88) bestehen, das derart zwischen dem dazugehörigen Führungsarm (82, 83) und dem Gehäuse (65) angebracht ist, daß es die zweite Aufbereitungswalze (66) zurückbringt und an die erste Aufbereitungswalze (67) drückt.

19. Mähmaschine nach Anspruch 18, ***dadurch gekennzeichnet***, daß sich die Führungsarme (82, 83) und die Lager (71, 72, 73, 74) außerhalb der Wände (62, 63) erstrecken.

20. Mähmaschine nach irgend einem der Ansprüche 15 bis 19, ***dadurch gekennzeichnet***, daß auf der Seite des Gehäuses (65), auf der der Getriebekasten (97) angebracht ist, die dazugehörigen Lager (71, 73) sich zwischen dem Getriebekasten (97) und der jeweiligen Wand (62) erstrecken.

21. Mähmaschine nach irgend einem der Ansprüche 15 bis 20, ***dadurch gekennzeichnet***, daß der Getriebekasten (97) mit Hilfe von elastischen Gliedern (77, 106) mit der dazugehörigen Wand (62) verbunden ist.

22. Mähmaschine nach den Ansprüchen 17 und 21, ***dadurch gekennzeichnet***, daß der eine (98) der Teile (98, 99) des Getriebekastens (97) an einem (73) der Lager (73, 74) der ersten Aufbereitungswalze (67) befestigt ist und daß die elastischen Glieder (77, 106) das elastische Glied (78) enthalten, das zur Verbindung des Lagers (73) mit der dazugehörigen Wand (62) dient.

23. Mähmaschine nach Anspruch 22, ***dadurch gekennzeichnet***, daß der Teil (98) des Getriebekastens (97) des weiteren mittels eines anderen elastischen Glieds (106) direkt an der dazugehörigen Wand (62) befestigt ist.

24. Mähmaschine nach irgend einem der Ansprüche 1 bis 23, ***dadurch gekennzeichnet***, daß sie zwei Gruppen (34, 35) von Aufbereitungsgliedern (33) enthält, die nebeneinander angeordnet sind, und daß die jeweiligen Übertragungsglieder (91) auf den Außenseiten der Gruppen (34, 35) angebracht sind.

25. Mähmaschine nach irgend einem der Ansprüche 1 bis 24, ***dadurch gekennzeichnet***, daß sie mit einem Motorfahrzeug (2) verbunden werden soll.
